# EUROPÄISCHE PATENTSCHRIFT

(11) **EP 3 765 746 B1**
(45) Veröffentlichungstag und Bekanntmachung des Hinweises auf die Patenterteilung: **30.07.2025**
(21) Anmeldenummer: 19711322.8
(22) Anmeldetag: 13.03.2019
(51) Int. Cl.: F04C 29/04, F04C 18/12

(54) **DREHKOLBENMASCHINE**
ROTARY PISTON ENGINE
MACHINE À PISTON ROTATIF

(30) Priorität: 15.03.2018 DE 102018203992
(43) Veröffentlichungstag der Anmeldung: 20.01.2021
(73) Patentinhaber: Gardner Denver Schopfheim GmbH, 79650 Schopfheim (DE)
(72) Erfinder: KAVUN, Dimitrij Sergey, 79650 Schopfheim (DE)
(74) Vertreter: Murgitroyd & Company
(86) Internationale Anmeldenummer: PCT/EP2019/056322
(87) Internationale Veröffentlichungsnummer: WO 2019/175267

(56) Entgegenhaltungen:
- DE-U1- 202009 010 390
- GB-A- 2 111 126
- US-A- 4 059 368
- US-A1- 2016 040 669

## Beschreibung

Die vorliegende Patentanmeldung nimmt die Priorität der deutschen Patentanmeldung DE 10 2018 203 992.5 in Anspruch, deren Inhalt durch Bezugnahme hierin aufgenommen wird.

Die Erfindung betrifft eine Drehkolbenmaschine, insbesondere eine Klauenmaschine, die beispielsweise als Verdichter, Vakuumpumpe oder Gebläse betreibbar ist.

Drehkolbenpumpen mit ineinander laufenden Drehkolben sind aus dem Stand der Technik durch offenkundige Vorbenutzung allgemein bekannt.

In der US 2016040669 A1 wird eine Zweiwellen-Drehkolbenpumpe offenbart, die in der Lage ist, die Zuverlässigkeit und die Betriebseffizienz zu verbessern, indem sie so weit wie möglich verhindert, dass Abgas in eine Pumpe zurückströmt, so weit wie möglich verhindert, dass das Innere der Pumpe übermäßig komprimiert wird, und den Temperaturanstieg in der Pumpe unterdrückt. Auch werden Zweiwellen-Rotationspumpe beschrieben, bei der zwei rotierende Wellen mit Rotoren durch Lager derart gelagert sind, dass die zwei Rotoren zum Einen in einer berührungsfreien Weise mit einem kleinen Spiel zwischen den Rotoren gedreht werden und die zwei Rotoren zum Anderen in einer berührungsfreien Weise mit einem kleinen Spiel zwischen einer Innenfläche eines Zylinders und den zwei Rotoren gedreht werden. Ein in den Zylinder gesaugtes und komprimiertes Gas wird aus dem Zylinder ausgestoßen, wobei in mindestens einem der die beiden Enden des Zylinders bildenden Endwandabschnitte ein Entweichungsloch gebildet ist, das einen Teil des komprimierten Gases entweichen lassen kann und sich in der axialen Richtung der Drehwellen öffnet.

Weiterhin beschreibt die GB 2111126 A eine Pumpe, z. B. eine mehrstufige Vakuumpumpe, die aus einer Pumpkammer besteht, durch die sich ein Paar paralleler Wellen erstreckt. Jede Welle trägt in Tandemanordnung Rotoren, von denen mindestens zwei vom Northey- oder "Klauen"-Typ sind. Die Rotoren sind auf den Wellen in zusammenwirkenden, passenden Paaren angeordnet, wobei jedes Paar einen eigenen Platz in der Pumpkammer einnimmt und von dem (den) benachbarten Paar(en) von Rotoren durch eine feste Trennwand (Trennwände) getrennt ist. Jeder "Klauen"-Rotor eines Paares ist auf seiner Welle in umgekehrter Ausrichtung zu dem/den entsprechenden "Klauen"-Rotor(en) des/der benachbarten Paares/Paare montiert. Die Rotoren können vom zweilappigen Roots-Typ sein.

Der Erfindung liegt die Aufgabe zugrunde, eine verbesserte Drehkolbenmaschine zu schaffen. Insbesondere soll diese besonders leistungsfähig, insbesondere in Bezug auf deren Saugvermögen, und äußerst langlebig sein.

Diese Aufgabe wird erfindungsgemäß durch eine Drehkolbenmaschine gemäß Anspruch 1 gelöst. Vorteilhafte Ausführungsformen können Merkmale abhängiger Ansprüche aufweisen.

Der Kern liegt darin, dass in dem Gehäuse, insbesondere genau, ein Belüftungskanal ausgebildet ist, der - direkt oder indirekt - eine Strömungsverbindung zwischen der Arbeitskammer bzw. mindestens einer der Arbeits-Teilkammern, insbesondere der ersten Arbeits-Teilkammer, und der Umgebung zeitweise herstellt. Der Belüftungskanal mündet über eine, insbesondere genau eine, Belüftungskanalöffnung, insbesondere druckseitig, in die Arbeitskammer aus.

Vorzugsweise ist in einer Verdichtungsphase ist der Belüftungskanal offen, so dass Luft, insbesondere Umgebungsluft mit Umgebungsdruck, von außen in die Arbeitskammer gelangt. Bei einer mindestens teilweisen Öffnung der Belüftungskanalöffnung ist eine Zufuhr von Luft von außen in die Arbeitskammer möglich.

Weiter vorzugsweise ist in einer Ansaugphase bzw. in einem Ansaugzyklus der Belüftungskanal bzw. die Belüftungskanalöffnung offen, was in Abhängigkeit eines Betriebspunkts zu einer Entspannung oder Belüftung des dann mit dem Belüftungskanal bzw. der Belüftungskanalöffnung in, direkter oder indirekter, Strömungsverbindung stehenden bzw. zu der Belüftungskanalöffnung benachbarten Raums in dem Gehäuse der Drehkolbenmaschine bzw. des dort sich befindenden Gases führt.

Thermische Belastungen von Teilen der Drehkolbenmaschine, wie von Lager/n und Welle/Welle/n, sind so wirksam durch die eingeführte Luft reduzierbar. Die eingeführte Luft hat im Allgemeinen ein niedrigeres Energieniveau. Die Leistungsfähigkeit der Drehkolbenmaschine ist so besonders hoch. Insbesondere bleibt durch die zeitweise Einführung von Luft in die Arbeitskammer während der Verdichtungsphase das Vakuumniveau der Drehkolbenmaschine ungestört. Die eingeführte Luft reduziert die innere Kompression.

Bei einer vollständigen Schließung der Belüftungskanalöffnung ist eine Zufuhr von Luft von außen in die Arbeitskammer unterbunden.

Es ist von Vorteil, wenn im Betrieb der erste und/oder zweite Rotor an der Belüftungskanalöffnung vorbeistreicht. Vorzugsweise streicht der erste und/oder zweite Rotor an der Druckanschlussöffnung und/oder der Sauganschlussöffnung vorbei.

Es ist von Vorteil, wenn der Belüftungskanal im Wesentlichen im Querschnitt kreisförmig ist. Die Belüftungskanalöffnung ist vorzugsweise kleiner, insbesondere wesentlich kleiner, als die Druckanschlussöffnung und/oder die Sauganschlussöffnung. Sie hat vorzugsweise eine Fläche, die zwischen 10 mm2 und 200 mm2, bevorzugt zwischen 20 mm2 und 100 mm2, liegt. Die Fläche der Belüftungskanalöffnung liegt günstigerweise zwischen 1 % und 10 %, bevorzugt zwischen 2 % und 10 %, bevorzugt zwischen 2 % und 5 %, der Fläche der Sauganschlussöffnung. Es ist von Vorteil, wenn sie zwischen 7 % und 20 %, bevorzugt zwischen 10 % und 16 %, der Fläche der Druckanschlussöffnung liegt.

Das Gehäuse hat günstigerweise ein Gehäuse-Grundteil und ein erstes sowie zweites mit dem Gehäuse-Grundteil in Verbindung stehendes Endteil. Die Endteile sind vorzugsweise einander gegenüberliegend mit dem Gehäuse-Grundteil, insbesondere lösbar, verbunden.

Die Arbeitskammer hat vorzugsweise einen Querschnitt, der durch zwei sich schneidende, eine "8" ergebende Kreise gebildet ist.

Über den Sauganschluss ist Gas in die Arbeitskammer bzw. in die Arbeits-Teilkammern einführbar. Es ist von Vorteil, wenn der Sauganschluss über mindestens eine Sauganschlussöffnung in die Arbeitskammer bzw. mindestens eine der Arbeits-Teilkammern ausmündet. Die Sauganschlussöffnung befindet sich in einem Saugbereich der Drehkolbenmaschine.

Über den Druckanschluss ist, insbesondere unter Überdruck oder Unterdruck gesetztes, Gas aus der Arbeitskammer bzw. aus einer Arbeits-Teilkammer abführbar. Es ist von Vorteil, wenn der Druckanschluss über mindestens eine Druckanschlussöffnung an die Arbeitskammer bzw. mindestens eine der Arbeits-Teilkammern, insbesondere die erste Arbeits-Teilkammer, angeschlossen ist. Die Druckanschlussöffnung befindet sich in einem Druckbereich der Drehkolbenmaschine.

Jede Arbeits-Teilkammer ist vorzugsweise durch eine Arbeitskammerwand des Gehäuses räumlich nach außen begrenzt, die innenseitig zumindest bereichsweise kreisbogenförmig verläuft. Der zugehörige Rotor streicht an der Arbeitskammerwand entlang.

Die Rotoren arbeiten günstigerweise berührungsfrei und sind vorzugsweise unterschiedlich ausgeführt. Sie sind aneinander angepasst. Im Betrieb rotieren sie bevorzugt gegensinnig zueinander und kämmen dann günstigerweise zumindest zeitweise miteinander. Jeder Rotor hat vorzugsweise mindestens zwei Rotorflügel, die vorzugsweise klauenartig sind. Jeder Rotorflügel hat vorzugsweise eine Klaue und eine Klauenausnehmung. Es ist zweckmäßig, wenn der erste und/oder zweite Rotor in Abhängigkeit der jeweiligen Drehposition mit seinen Rotorflügeln den Sauganschluss und/oder Druckanschluss, insbesondere stirnseitig, zumindest zeitweise steuert bzw. beeinflusst, insbesondere verschließt bzw. freigibt.

Weitere vorteilhafte Ausgestaltungen der Erfindung sind in den Unteransprüchen angegeben.

Die Drehkolbenmaschine gemäß dem Unteranspruch 2 ist besonders effizient. Der Betriebsdruck bzw. der Enddruck der Drehkolbenmaschine wird, insbesondere von einem atmosphärischen Druck aus, in einer Stufe bzw. in einem Schritt erzielt.

Der erste Rotor gemäß dem Unteranspruch 3 ist derart angeordnet bzw. ausgebildet, dass dieser, insbesondere stirnseitig, insbesondere mit seinen Rotorflügeln, die Belüftungskanalöffnung in ihrem wirksamen Öffnungsquerschnitt steuert bzw. beeinflusst. In Abhängigkeit der jeweiligen Drehposition des ersten Rotors ist die Belüftungskanalöffnung vollständig freigegeben, vollständig verschlossen oder teilweise freigegeben/verschlossen. Günstigerweise bildet der erste Rotor einen Steuerkolben.

Vorzugsweise ist in der gemeinsamen Arbeitsraum-Phase der Rotoren die Belüftungskanalöffnung vollständig verschlossen, sodass eine Luftzufuhr von außen unterbleibt. In der gemeinsamen Arbeitsraum-Phase steht vorzugsweise ein in der ersten Arbeits-Teilkammer durch den ersten Rotor räumlich begrenzter erster Arbeits-Teilraum mit einem in der zweiten Arbeits-Teilkammer vorliegenden, durch den zweiten Rotor räumlich begrenzten zweiten Arbeits-Teilraum in Strömungsverbindung. Die Arbeits-Teilräume grenzen aneinander an. Sie befinden sich vorzugsweise auf einer gemeinsamen Seite der Drehkolbenmaschine. Es ist zweckmäßig, wenn der zweite Rotor einen Förderkolben bildet.

Optional ist in der gemeinsamen Arbeitsraum-Phase der Druckanschluss vollständig verschlossen. Dies erfolgt vorzugsweise durch den ersten Rotor und den zweiten Rotor. So ist eine äußerst wirksame Kompression des Gases in der Arbeitskammer möglich. Eine Abgabe des Gases aus der Arbeitskammer ist in der gemeinsamen Arbeitsraum-Phase unterbunden.

Zwischen den Rotoren liegt vorzugsweise in der gemeinsamen Arbeitsraum-Phase ein freier Totraum zumindest zeitweise vor. Es ist zweckmäßig, wenn sich der Totraum in einem zentralen Bereich der Arbeitskammer befindet.

Vorzugsweise ist der Druckanschluss in der Verdichtungsphase vollständig verschlossen. Dies erlaubt ein besonders einfaches bzw. effizientes Erreichen des Betriebsdrucks.

Weiter vorzugsweise ist die Belüftungskanalöffnung bei einer Ausschiebephase, insbesondere durch den ersten Rotor, vollständig verschlossen. Dies verhindert wirksam, dass die Rotoranordnung das Gas über den Belüftungskanal ausschiebt.

Bevorzugt ist der Druckanschluss bei der Ausschiebephase zumindest teilweise offen. Dies erlaubt ein sicheres Ausschieben des Gases aus der Arbeitskammer über den Druckanschluss.

Die Belüftungskanalöffnung gemäß dem Unteranspruch 5 ist in einem Druckbereich der Drehkolbenmaschine angeordnet. Dort liegt ein Druck vor, der gegenüber dem ursprünglichen, insbesondere atmosphärischen, Druck verändert, wie erhöht oder reduziert, ist. Die Belüftungskanalöffnung ist somit beabstandet zu einem Saugbereich der Drehkolbenmaschine angeordnet.

Gemäß dem Unteranspruch 6 ist die Belüftungskanalöffnung zu der Druckanschlussöffnung des Druckanschlusses benachbart, aber beabstandet angeordnet. Insbesondere ist die Belüftungskanalöffnung in Drehrichtung des ersten Rotors der Druckanschlussöffnung vorgeordnet.

Gemäß dem Unteranspruch 9 ist das Endteil als Lagerschild, insbesondere B-Lagerschild, ausgeführt. Es ist von Vorteil, wenn dieses mindestens ein Lager zum Lagern der Rotoranordnung trägt. Das Endteil ist vorzugsweise abnehmbar.

Nachfolgend wird unter Bezugnahme auf die beigefügte Zeichnung eine bevorzugte Ausführungsform der Erfindung beispielhaft beschrieben. Dabei zeigen:

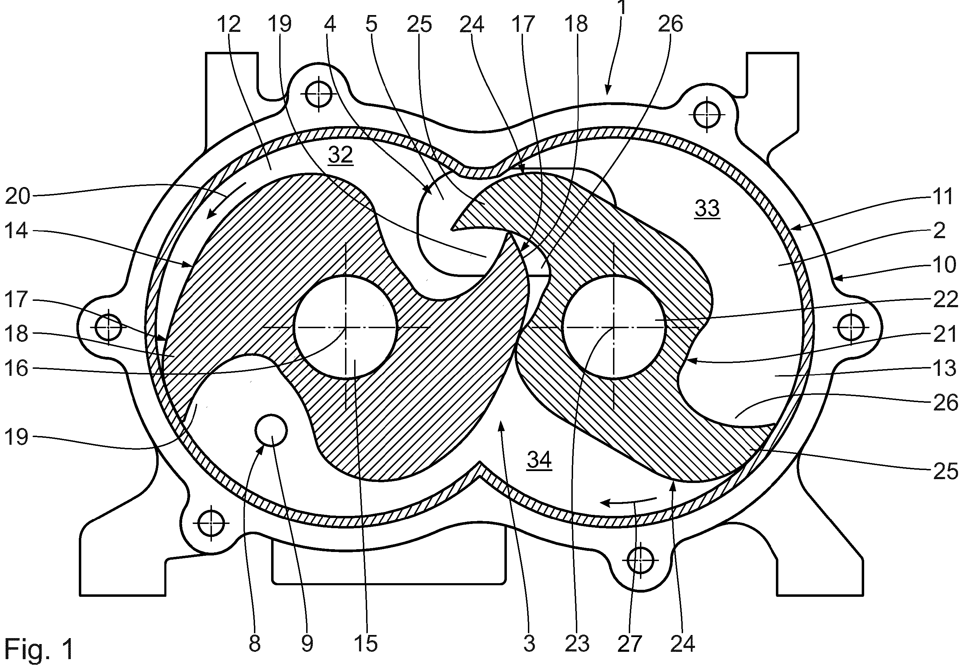

Fig. 1 bis 6 Querschnitte einer erfindungsgemäßen Drehkolbenmaschine, die aufeinanderfolgende Stellungen der Rotoranordnung und deren Wechselwirkung mit Sauganschluss, Druckanschluss und Belüftungskanal veranschaulichen.

Eine in den Fig. 1 bis 6 teilweise dargestellte Drehkolbenmaschine umfasst ein Gehäuse 1, das eine Arbeitskammer 2 räumlich begrenzt. In der Arbeitskammer 2 ist eine betätigbare Rotoranordnung 3 angeordnet. Die Drehkolbenmaschine hat außerdem einen Sauganschluss 4, der über eine Sauganschlussöffnung 5 in die Arbeitskammer 2 ausmündet. Ferner weist die Drehkolbenmaschine einen zu dem Sauganschluss 4 beabstandet angeordneten Druckanschluss 6 auf, der über eine Druckanschlussöffnung 7 mit der Arbeitskammer 2 in Strömungsverbindung steht. Zusätzlich weist die Drehkolbenmaschine einen Belüftungskanal 8 auf, der über eine Belüftungskanalöffnung 9 in die Arbeitskammer 2 ausmündet.

Das Gehäuse 1 ist mehrteilig. Es umfasst ein erstes Lagerschild 10 und ein Gehäuse-Grundteil 11 sowie ein zweites Lagerschild (nicht dargestellt). Die Lagerschilde 10 sind in zusammengesetztem Zustand des Gehäuses 1 an gegenüberliegenden Seiten des Gehäuse-Grundteils 11 angeordnet.

Die Lagerschilde 10 und das Gehäuse-Grundteil 11 begrenzen zusammen die Arbeitskammer 2. Die Lagerschilde 10 begrenzen räumlich die Arbeitskammer 2 in Längsrichtung bzw. axial, während das Gehäuse-Grundteil 11 bzw. deren Arbeitskammerwand die Arbeitskammer 2 nach seitlich außen bzw. radial außen räumlich begrenzt.

Die Arbeitskammer 2 weist eine erste Arbeits-Teilkammer 12 und eine zweite Arbeits-Teilkammer 13 auf, die im Wesentlichen identisch ausgebildet sind. Die Arbeits-Teilkammern 12, 13 sind nebeneinander angeordnet und stehen miteinander in direkter Strömungsverbindung. Sie sind in einem Anschlussbereich zueinander offen.

In der ersten Arbeits-Teilkammer 12 ist ein erster Rotor 14 der Rotoranordnung 3 angeordnet. Der erste Rotor 14 ist auf einer ersten Rotorwelle 15 drehfest angeordnet, die in dem Gehäuse 1 um deren erste Längsmittelachse 16 drehbar bzw. drehantreibbar gelagert ist.

Die in Fig. 1 dargestellte Kontur des ersten Rotors 14 ist bezüglich der ersten Längsmittelachse 16 punktsymmetrisch. Er hat zwei einander gegenüberliegende erste Rotorflügel 17, die von einem ersten Rotorgrundkörper vorspringen. Jeder erste Rotorflügel 17 hat eine erste Klaue 18 und eine durch die erste Klaue 18 begrenzte erste Klauenausnehmung 19. Die ersten Klauenausnehmungen 19 sind bezüglich der ersten Längsmittelachse 16 nach radial außen offen. Sie sind durch die ersten Klauen 18 entgegen einer ersten Drehrichtung 20 des ersten Rotors 14 und auch teilweise nach radial außen räumlich begrenzt.

In der zweiten Arbeits-Teilkammer 13 ist ein zweiter Rotor 21 der Rotoranordnung 3 angeordnet. Der zweite Rotor 21 ist auf einer zweiten Rotorwelle 22 drehfest angeordnet, die in dem Gehäuse 1 um deren zweite Längsmittelachse 23 drehbar bzw. drehantreibbar angeordnet ist. Die Rotorwellen 15, 22 verlaufen parallel zueinander.

Der zweite Rotor 21 ist bezüglich der zweiten Längsmittelachse 23 punktsymmetrisch. Er umfasst zwei einander gegenüberliegende zweite Rotorflügel 24, die von einem zweiten Rotorgrundkörper vorspringen. Jeder zweite Rotorflügel 24 hat eine zweite Klaue 25 und eine durch die zweite Klaue 25 begrenzte zweite Klauenausnehmung 26. Die zweiten Klauenausnehmungen 26 sind bezüglich der zweiten Längsmittelachse 23 nach radial außen offen. Sie sind durch die zweiten Klauen 25 entgegen einer zweiten Drehrichtung 27 des zweiten Rotors 21 und auch teilweise nach radial außen räumlich begrenzt.

Der erste Rotor 14 und die erste Rotorwelle 15 sind beispielsweise einteilig miteinander verbunden. Alternativ sind diese separat ausgeführt. Analoges gilt zu dem zweiten Rotor 21 und der zweiten Rotorwelle 22.

Jede Rotorwelle 15, 22 ist vorzugsweise in dem Gehäuse 1 beidseitig gelagert. Die erste Rotorwelle 14 steht vorzugsweise mit einem Antrieb in Antriebsverbindung. Die Rotorwellen 15, 22 stehen vorzugsweise über ein Synchronisationsgetriebe miteinander in Antriebsverbindung.

Die ersten Klauen 18 sind derart dimensioniert bzw. geformt, dass sie bei Rotation in der ersten Drehrichtung 20 innenseitig dicht entlang des Gehäuse-Grundteils 11 streichen. Die zweiten Klauen 25 sind derart dimensioniert bzw. geformt, dass sie bei Rotation in der zweiten Drehrichtung 27 innenseitig dicht entlang des Gehäuse-Grundteils 11 streichen.

Der Sauganschluss 4 ist in dem ersten Lagerschild 10 angeordnet. Über die Sauganschlussöffnung 5 mündet der Sauganschluss 4 exzentrisch in die erste Arbeits-Teilkammer 12 als auch in die zweite Arbeits-Teilkammer 13 aus. Hauptsächlich befindet sich die Sauganschlussöffnung 5 in der zweiten Arbeits-Teilkammer 13.

Der Druckanschluss 6 ist in dem ersten Lagerschild 10 angeordnet. Über die Druckanschlussöffnung 7 mündet der Druckanschluss 6 exzentrisch in die erste Arbeits-Teilkammer 12 aus.

Der Belüftungskanal 8 ist in dem ersten Lagerschild 10 angeordnet. Über die Belüftungskanalöffnung 9 mündet der Belüftungskanal 8 exzentrisch in die erste Arbeits-Teilkammer 12 aus. Die Belüftungskanalöffnung 9 ist benachbart zu der Druckanschlussöffnung 7 angeordnet. Sie ist zwischen der Sauganschlussöffnung 5 und der Druckanschlussöffnung 7 in der ersten Drehrichtung 20 angeordnet. In Bezug auf die erste Drehrichtung 20 ist die Belüftungskanalöffnung 9 der Druckanschlussöffnung 7 vorgeordnet und der Sauganschlussöffnung 5 nachgeordnet.

Die Belüftungskanalöffnung 9 ist wesentlich kleiner als die Druckanschlussöffnung 7. Sie ist wesentlich kleiner als die Sauganschlussöffnung 5, die größer, insbesondere wesentlich größer, als die Druckanschlussöffnung 7 ist. Die Fläche der Belüftungskanalöffnung 9 liegt zwischen 1 % und 10 %, bevorzugter zwischen 2 % und 5 %, der Fläche der Sauganschlussöffnung 5. Sie liegt zwischen 7 % und 20 %, bevorzugter zwischen 10 % und 16 %, der Fläche der Druckanschlussöffnung 7.

Nachfolgend wird der Betrieb der Drehkolbenmaschine beschrieben. Die erste Rotorwelle 15 wird um die erste Längsmittelachse 16 in der ersten Drehrichtung 20 mittels des Antriebs in Rotation versetzt. Über das zwischen der ersten Rotorwelle 15 und der zweiten Rotorwelle 22 wirksame Synchronisationsgetriebe wird auch die zweite Rotorwelle 22 entsprechend in Rotation versetzt. Die Rotorwellen 15, 22 und damit auch die Rotoren 14, 21 sind gegensinnig drehangetrieben. Die Rotoren 14, 21 wirken zusammen und stehen zeitweise miteinander in kämmendem Eingriff.

Fig. 1 veranschaulicht einen Beginn eines Ansaugzyklus der Drehkolbenmaschine. Die Sauganschlussöffnung 5 ist durch den ersten Rotor 14 und den zweiten Rotor 21 nur teilweise verschlossen. Sie ist umgekehrt teilweise offen. Gas kann somit über den Sauganschluss 4 in die erste Arbeits-Teilkammer 12 und zweite Arbeits-Teilkammer 13 einströmen.

Die Druckanschlussöffnung 7 ist durch den ersten Rotor 14 vollständig verschlossen.

Der erste Rotor 14 und der zweite Rotor 21 sperren eine Strömungsverbindung zwischen der Sauganschlussöffnung 5 und der Belüftungskanalöffnung 9. Eine erste Klaue 18 des ersten Rotors 14 greift in eine zweite Klauenausnehmung 26 des zweiten Rotors 21.

Die Rotoren 14, 21 begrenzen zusammen mit dem Gehäuse 1 in der Arbeitskammer 2 einen Ansaug- bzw. Einlassraum 32, der sich an die Sauganschlussöffnung 5 beidseits anschließt und sich in die erste und zweite Arbeits-Teilkammer 12 bzw. 13 erstreckt. Der Ansaug- bzw. Einlassraum 32 vergrößert sich während des Ansaugzyklus durch Drehung der Rotoren 14, 21. Er ist geschlossen.

Die Belüftungskanalöffnung 9 ist vollständig offen. Sie ist unbedeckt. Ein Arbeitsraum 33, der im Wesentlichen durch das Gehäuse 1 und den zweiten Rotor 21 räumlich begrenzt ist und sich in der zweiten Arbeits-Teilkammer 13 befindet, steht gemäß Fig. 1 kurz vor einem isochoren Transport.

In dem Arbeitsraum 33 der Drehkolbenmaschine herrscht aufgrund der durch die Drehung des zweiten Rotors 21 herbeigeführten Kinematik des Gases ein statischer Unterdruck in Bezug auf den atmosphärischen Druck.

Ein Entspannungs-/Belüftungsraum 34 der Drehkolbenmaschine erstreckt sich in Fig. 1 in der ersten Arbeits-Teilkammer 12 und der zweiten Arbeits-Teilkammer 13. Er ist von dem Ansaug- bzw. Einlassraum 32 und dem Arbeitsraum 33 räumlich getrennt. Der Entspannungs-/Belüftungsraum 34 ist durch den ersten Rotor 14, den zweiten Rotor 21 und das Gehäuse 1 räumlich begrenzt.

Die Belüftungskanalöffnung 9 steht in Fig. 1 mit dem Entspannungs-/Belüftungsraum 34 in Strömungsverbindung. Der Entspannungs-/Belüftungsraum 34 steht in Abhängigkeit von einem angefahrenen Betriebspunkt unter Überdruck oder Unterdruck in Bezug auf den atmosphärischen Druck.

Wenn in dem Entspannungs-/Belüftungsraum 34 ein Überdruck in Bezug auf den atmosphärischen Druck herrscht, wird der Entspannungs-/Belüftungsraum 34 bzw. das dort eingeschlossene Gas über die Belüftungskanalöffnung 9 bzw. den Belüftungskanal 8 in die Atmosphäre entspannt.

Wenn dagegen ein Betriebspunkt erreicht wird, bei dem eine innere Verdichtung in dem Entspannungs-/Belüftungsraum 34 nicht ausreichend ist, um den statischen Druck auf atmosphärischen Druck anzuheben, herrscht in dem Entspannungs-/Belüftungsraum 34 auch kurz vor Öffnen bzw. Erreichen der Druckanschlussöffnung 7 Unterdruck in Bezug auf den atmosphärischen Druck. In diesem Fall wird der Entspannungs-/Belüftungsraum 34 über die Belüftungskanalöffnung 9 bzw. den Belüftungskanal 8 dann atmosphärisch belüftet. In dem Entspannungs-/Belüftungsraum 34 herrscht in diesem Betriebspunkt vorzugsweise weniger als 400 mbar(a) Unterdruck in Bezug auf den atmosphärischen Druck.

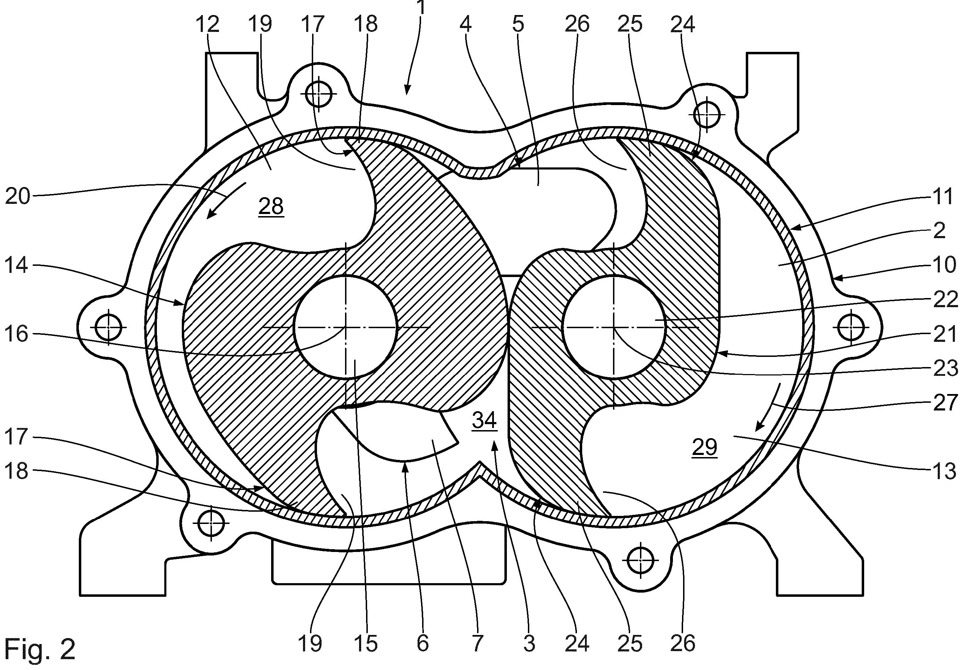

Wie Fig. 2 zeigt, schließt sich an den Ansaugzyklus ein isochorer Transportzyklus zum isochoren Transportieren des angesaugten, in dem Ansaugraum 32 eingeschlossenen Gases an. Der Ansaugraum 32 bzw. das dort eingeschlossene Gas wurde durch Drehung der Rotoren 14, 21 in der jeweiligen Drehrichtung 20 bzw. 27 um einen angularen Bereich von 50° bis 75° in/auf zwei separate, voneinander getrennte Transporträume 28, 29 aufgeteilt, die einander abgewandt und durch das Gehäuse 1 und den jeweiligen Rotor 14 bzw. 21 begrenzt sind. Jeder erste und zweite Transportraum 28 bzw. 29 ist in der jeweiligen Arbeits-Teilkammer 12, 13 angeordnet und abgeschlossen. Die Transporträume 28, 29 bzw. das dort eingeschlossene Gas werden/wird isochor verschoben. Die Rotoren 14, 21 stehen außer Eingriff. Insbesondere stehen die Klauen 18 bzw. 25 und die Klauenausnehmungen 19, 26 der Rotoren 14, 21 außer Eingriff. Der zweite Transportraum 29 entspricht im Wesentlichen dem Arbeitsraum 33.

Die Druckanschlussöffnung 7 ist größtenteils offen. Der erste Rotor 14 öffnet die Druckanschlussöffnung 7. Der Entspannungs-/Belüftungsraum 34 hat sich verkleinert.

Die Sauganschlussöffnung 5 ist weiterhin teilweise offen. Gas kann so in die Arbeitskammer 2 für einen neuen Zyklus eintreten. Die Drehkolbenmaschine mit den Rotoren 14, 21 ermöglicht zwei Saug- und Druckzyklen pro Rotor-Umdrehung.

Die Belüftungskanalöffnung 9 ist durch den ersten Rotor 14 vollständig geschlossen.

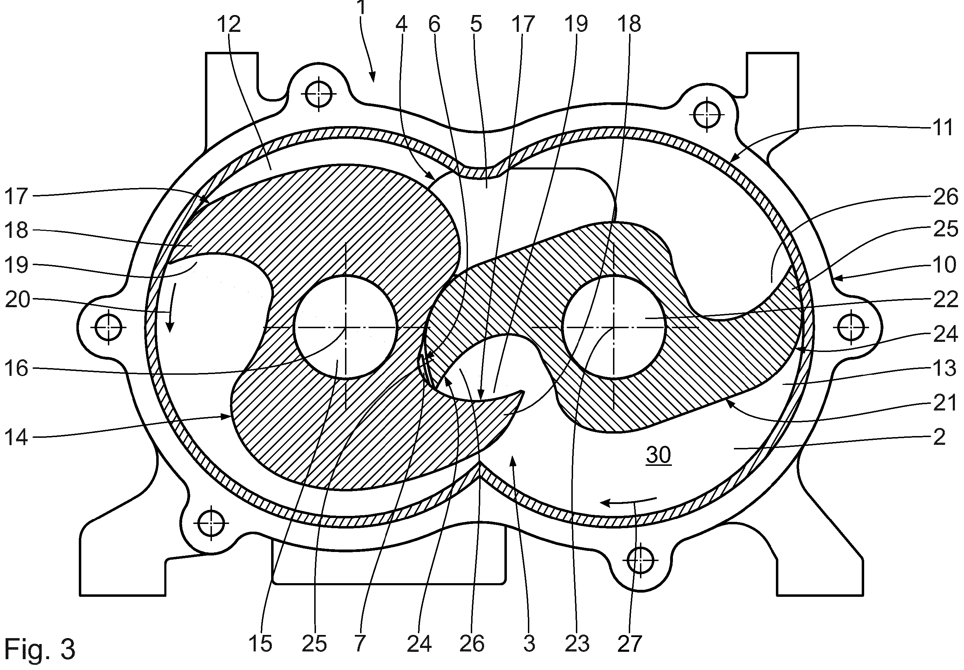

Wie Fig. 3 zeigt, schließt sich an den isochoren Transportzyklus eine gemeinsame Arbeitsraum-Phase an. Die beiden Transporträume 28, 29 werden durch Drehung der Rotoren 14, 21 in der jeweiligen Drehrichtung 20 bzw. 27 um einen angularen Bereich von 55° bis 85° zu einem gemeinsamen Arbeitsraum 30 zusammengeführt, der abgeschlossen ist. Der gemeinsame Arbeitsraum 30 ist über die Rotoren 14, 21 von der Sauganschlussöffnung 5 getrennt, die teilweise offen ist. Er ist beabstandet zu der Sauganschlussöffnung 5 angeordnet. Er erstreckt sich über die erste Arbeits-Teilkammer 12 und die zweite Arbeits-Teilkammer 13. Eine zweite Klaue 25 des zweiten Rotors 21 greift in eine erste Klauenausnehmung 19 des ersten Rotors 14 ein.

Die Druckanschlussöffnung 7 ist fast vollständig durch den ersten Rotor 14 geschlossen. Der zweite Rotor 21 sperrt eine Strömungsverbindung zwischen der Druckanschlussöffnung 7 und dem gemeinsamen Arbeitsraum 30.

Die Belüftungskanalöffnung 9 ist durch den ersten Rotor 14 vollständig geschlossen.

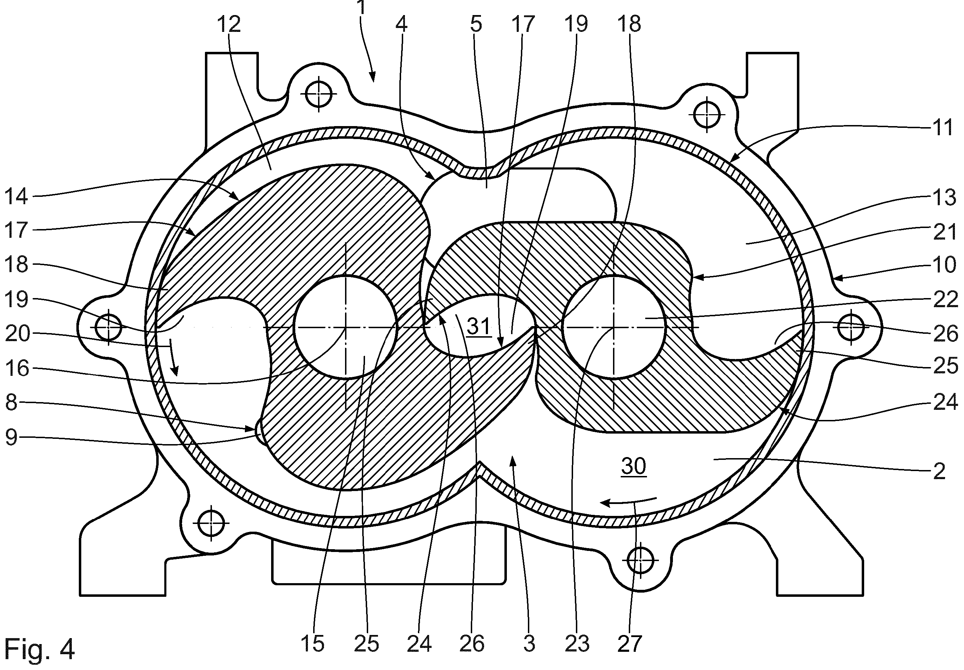

An die gemeinsame Arbeitsraum-Phase schließt sich durch Drehung der Rotoren 14, 21 in der jeweiligen Drehrichtung 20 bzw. 27 um einen angularen Bereich von 5° bis 35° eine Totraum-Einschluss- und Totraum-Rückführungs-Phase an, die in Fig. 4 gezeigt ist. Ein Totraum 31 ist zwischen dem ersten Rotor 14 und dem zweiten Rotor 21 in einem zentralen Bereich des Gehäuses 1 in der Arbeitskammer 2 zwischen benachbarten Klauen 18 bzw. 25 bzw. zwischen benachbarten Klauenausnehmungen 19, 26 eingeschlossen. Der Totraum 31 ist abgeschlossen. Er liegt zwischen den Rotorwellen 15, 22. In der Totraum-Einschluss- und Totraum-Rückführungs-Phase wird der Totraum 31 eingeschlossen und zu dem Saugebereich zurückgeführt.

Die Belüftungskanalöffnung 9 wird dabei durch den ersten Rotor 14 allmählich freigegeben. Der erste Rotor 14 öffnet die Belüftungskanalöffnung 9.

Die Druckanschlussöffnung 7 ist durch den ersten Rotor 14 vollständig geschlossen.

Die Sauganschlussöffnung 5 ist weiterhin teilweise offen.

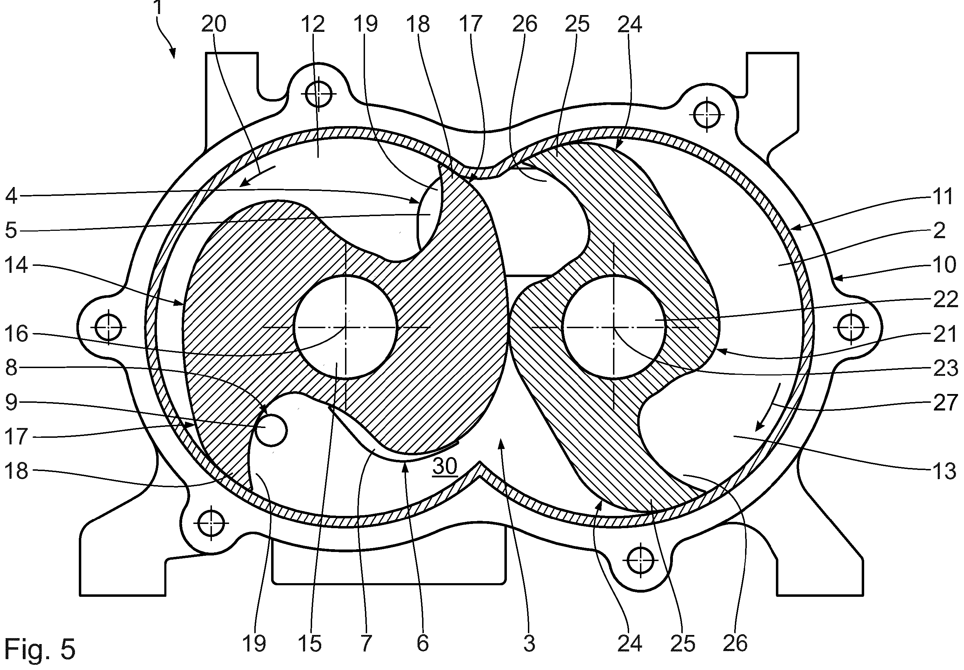

An die Totraum-Einschluss- und Totraum-Rückführungs-Phase schließt sich durch Drehung der Rotoren 14, 21 in der jeweiligen Drehrichtung 20 bzw. 27 um einen angularen Bereich von 45° bis 75° eine in Fig. 5 gezeigte Belüftungskanal-Öffnungsphase an, in der die Belüftungskanalöffnung 9 vollständig offen ist und der Arbeitsraum 30 mit Umgebungsluft aufgefüllt und auf Umgebungsdruck aufgeladen wird. Der Arbeitsraum 30 verkleinert sich in seinem Volumen. Günstigerweise ist so Druckluft bzw. Vakuum erzeugbar. Der erste Rotor 14 ist gegenüber der Belüftungskanalöffnung 9 verdreht.

Der erste Rotor 14 gibt außerdem allmählich die Druckanschlussöffnung 7 frei. Er öffnet diese. Gas kann so die Arbeitskammer 2 über den Druckkanal 6 verlassen.

Die Sauganschlussöffnung 5 ist weiterhin teilweise offen.

Die Rotoren 14, 21 stehen außer Eingriff.

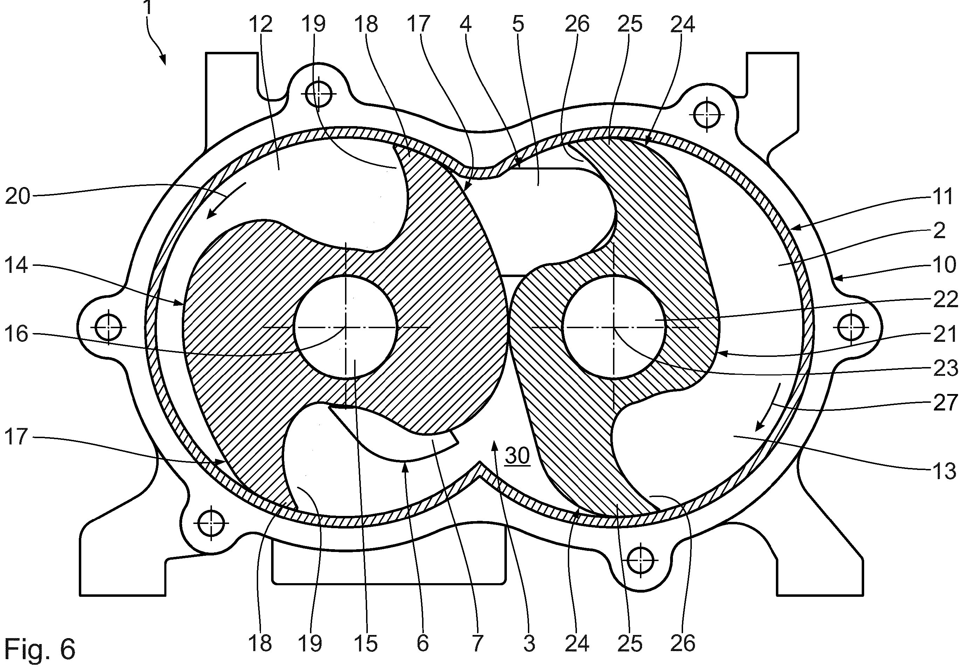

An die Belüftungskanal-Öffnungsphase schließt sich durch Drehung der Rotoren 14, 21 in der jeweiligen Drehrichtung 20 bzw. 27 um einen angularen Bereich von 5° bis 30° eine in Fig. 6 gezeigte weitere Phase an, in welcher die Belüftungskanalöffnung 9 vollständig durch den ersten Rotor 14 geschlossen ist. Die Rotoren 14, 21 stehen außer Eingriff.

Die Druckanschlussöffnung 7 ist zumindest teilweise offen.

Die Sauganschlussöffnung 5 ist weiterhin teilweise offen.

Anschließend folgt wieder die in Fig. 1 gezeigte Ansaugphase. Bei einer Drehkolbenmaschine mit zweifacher Rotorklauenausführung werden pro Rotorumdrehung zwei Saug- und Druckzyklen durchgeführt.

Der erste Rotor 14 bildet bezogen auf die Belüftungskanalöffnung 9 einen Steuerrotor.

## Patentansprüche

1. Drehkolbenmaschine, umfassend
a) ein eine Arbeitskammer (2) räumlich begrenzendes Gehäuse (1),
b) einen Sauganschluss (4) zum Führen von Gas in die Arbeitskammer (2),
c) einen sich an die Arbeitskammer (2) anschließenden Druckanschluss (6) zum Führen des Gases aus der Arbeitskammer (2),
d) eine Rotoranordnung (4) mit
i) einem in einer ersten Arbeits-Teilkammer (12) der Arbeitskammer (2) drehbar angeordneten ersten Rotor (14), und
ii) einem mit dem ersten Rotor (14) zusammenwirkenden, in einer zweiten Arbeits-Teilkammer (13) der Arbeitskammer (2) drehbar angeordneten zweiten Rotor (21), **gekennzeichnet durch**
e) einen Entspannungs-/Belüftungsraum (34) der sich in der ersten Arbeits-Teilkammer (12) und der zweiten Arbeits-Teilkammer (13) erstreckt, und
f) einen sich über eine Belüftungskanalöffnung (9) an die Arbeitskammer (2) anschließenden, in dem Gehäuse (1) ausgebildeten Belüftungskanal (8) sowohl zum Entspannen als auch zum Belüften des Entspannungs-/Belüftungsraums (34).

2. Drehkolbenmaschine nach Anspruch 1, **dadurch gekennzeichnet, dass** diese einstufig ist.

3. Drehkolbenmaschine nach Anspruch 1 oder 2, **dadurch gekennzeichnet, dass** die Belüftungskanalöffnung (9) durch den ersten Rotor (14) steuerbar, insbesondere freigebbar und/oder verschließbar, ist.

4. Drehkolbenmaschine nach einem der vorherigen Ansprüche, **dadurch gekennzeichnet, dass** die Belüftungskanalöffnung (9) vor Öffnung des Druckanschlusses (6) vollständig offen ist.

5. Drehkolbenmaschine nach einem der vorherigen Ansprüche, **dadurch gekennzeichnet, dass** die Belüftungskanalöffnung (9) in einem Druckbereich der Drehkolbenmaschine angeordnet ist.

6. Drehkolbenmaschine nach einem der vorherigen Ansprüche, **dadurch gekennzeichnet, dass** die Belüftungskanalöffnung (9) zu einer in der Arbeitskammer (2) angeordneten Druckanschlussöffnung (7) des Druckanschlusses (6) benachbart angeordnet ist.

7. Drehkolbenmaschine nach einem der vorherigen Ansprüche, **dadurch gekennzeichnet, dass** die Belüftungskanalöffnung (9) in die Arbeitskammer (2) beabstandet zu Totraum (31) zwischen dem ersten Rotor (14) und dem zweiten Rotor (21) ausmündet.

8. Drehkolbenmaschine nach einem der vorherigen Ansprüche, **dadurch gekennzeichnet, dass** die Belüftungskanalöffnung (9) bei Schließung vom Totraum (31) zwischen dem ersten Rotor (14) und dem zweiten Rotor (21), insbesondere durch den ersten Rotor (14), vollständig verschlossen ist.

9. Drehkolbenmaschine nach einem der vorherigen Ansprüche, **dadurch gekennzeichnet, dass** der Belüftungskanal (8) in einem ersten Endteil (10) des Gehäuses (1) angeordnet ist, das als Lagerschild, insbesondere B-Lagerschild, ausgeführt ist.

## Claims

1. A rotary piston engine, comprising
a) a housing (1) spatially limiting a working chamber (2),
b) an intake connection (4) for guiding gas into the working chamber (2),
c) a pressure connection (6), connected to the working chamber (2), for guiding the gas out of the working chamber (2),
d) a rotor assembly (4) having
i) a first rotor (14) rotatably arranged in a first working sub-chamber (12) of the working chamber (2), and
ii) a second rotor (21) rotatably arranged in a second working sub-chamber (13) of the working chamber (2) and cooperating with the first rotor (14), **characterised by**
e) an expansion/ventilation space (34) which extends in the first working sub-chamber (12) and the second working sub-chamber (13), and
f) a ventilation channel (8), formed in the housing (1) and connected to the working chamber (2) via a ventilation channel opening (9), both for the expansion and for the ventilation of the expansion/ventilation space (34).

2. The rotary piston engine according to Claim 1, **characterised in that** it is one-stage.

3. The rotary piston engine according to Claim 1 or 2, **characterised in that** the ventilation channel opening (9) is controllable, in particular releasable and/or closable, via the first rotor (14).

4. The rotary piston engine according to any one of the preceding claims, **characterised in that** the ventilation channel opening (9) is completely open prior to opening of the pressure connection (6).

5. The rotary piston engine according to any one of the preceding claims, **characterised in that** the ventilation channel opening (9) is arranged in a pressure region of the rotary piston engine.

6. The rotary piston engine according to any one of the preceding claims, **characterised in that** the ventilation channel opening (9) is arranged alongside a pressure connection opening (7), arranged in the working chamber (2), of the pressure connection (6).

7. The rotary piston engine according to any one of the preceding claims, **characterised in that** the ventilation channel opening (9) opens out into the working chamber (2) at a distance from the dead space (31) between the first rotor (14) and the second rotor (21).

8. The rotary piston engine according to any one of the preceding claims, **characterised in that** the ventilation channel opening (9) is completely closed, in particular by the first rotor (14), during closure of the dead space (31) between the first rotor (14) and the second rotor (21).

9. The rotary piston engine according to any one of the preceding claims, **characterised in that** the ventilation channel (8) is arranged in a first end part (10) of the housing (1), which is embodied as a bearing plate, in particular a B bearing plate.

## Revendications

1. Machine à piston rotatif, comprenant
a) un carter (1) délimitant dans l'espace une chambre de travail (2),
b) un raccord d'aspiration (4) pour le guidage du gaz dans la chambre de travail (2),
c) un raccord de pression (6) se raccordant à la chambre de travail (2) pour le guidage du gaz hors de la chambre de travail (2),
d) un agencement de rotors (4) avec
i) un premier rotor (14) disposé de manière rotative dans une première chambre partielle de travail (12) de la chambre de travail (2), et
ii) un second rotor (21) en interaction avec le premier rotor (14) et disposé de manière rotative dans une second chambre partielle de travail (13) de la chambre de travail (2), **caractérisé par**
e) un espace de détente/ventilation (34) s'étendant dans la première chambre partielle de travail (12) et la seconde chambre partielle de travail (13), et
f) un canal de ventilation (8) situé dans le carter (1) et se raccordant à la chambre de travail (2) par l'intermédiaire d'une ouverture de canal de ventilation (9), à la fois pour la détente et pour la ventilation de l'espace de détente/ventilation (34).

2. Machine à piston rotatif selon la revendication 1, **caractérisée en ce qu'**elle ne comporte qu'un seul étage.

3. Machine à piston rotatif selon la revendication 1 ou 2, **caractérisée en ce que** l'ouverture du canal de ventilation (9) peut être commandée, en particulier ouverte et/ou refermée, par le premier rotor (14).

4. Machine à piston rotatif selon l'une des précédentes revendications, **caractérisée en ce que** l'ouverture du canal de ventilation (9) est entièrement ouverte avant l'ouverture du raccord de pression (6).

5. Machine à piston rotatif selon l'une des précédentes revendications, **caractérisée en ce que** l'ouverture du canal de ventilation (9) est disposée dans une zone de pression de la machine à piston rotatif.

6. Machine à piston rotatif selon l'une des précédentes revendications, **caractérisée en ce que** l'ouverture du canal de ventilation (9) est dispose de manière adjacente à une ouverture de raccord de pression (7) du raccord de pression (6) disposée dans la chambre de travail (2).

7. Machine à piston rotatif selon l'une des précédentes revendications, **caractérisée en ce que** l'ouverture du canal de ventilation (9) débouche dans la chambre de travail (2) à distance d'un volume mort (31) entre le premier rotor (14) et le second rotor (21).

8. Machine à piston rotatif selon l'une des précédentes revendications, **caractérisée en ce que** l'ouverture du canal de ventilation (9) est entièrement refermée lorsque le volume mort (31) entre le premier rotor (14) et le second rotor (21) est fermé, en particulier par le premier rotor (14).

9. Machine à piston rotatif selon l'une des précédentes revendications, **caractérisée en ce que** le canal de ventilation (8) est disposé dans une première partie terminale (10) du carter (1), laquelle est réalisée sous forme d'une flasque de palier, en particulier d'une flasque de palier B.
